# EUROPEAN PATENT APPLICATION

(11) **EP 1 030 525 A2**
(43) Date of publication of application: **23.08.2000**
(21) Application number: 00300262.3
(22) Date of filing: 14.01.2000
(51) Int. Cl.: H04N 7/52

(54) **Data generation for multichannel video/audio signals**

(30) Priority: 17.02.1999 JP 3929899
(71) Applicant: Matsushita Electric Industrial Co., Ltd., Kadoma-shi, Osaka 571-8501 (JP)
(72) Inventor: Miyabe, Hiroshi, Tokyo 177-0041 (JP)
(74) Representative: Senior, Alan Murray

(57) **Abstract**

A video/audio data generating apparatus has a first processing section (1) which receives a video/audio signal formed of a video signal channel and a plurality of audio channels, and converts the video and audio channel contents of each video frame to respective sets of compressed data which are supplied to a second processing section (2), which generates a series of data frames conveying the contents of the video/audio signal. The data frames are respectively identified by headers, while in addition it is ensured that the data rate of the generated data frames is substantially identical for the case of both NTSC format data and PAL format data, so that a data processing apparatus which operates on the data frames can readily be configured to use a single system to perform processing of both NTSC and PAL data frames, irrespective of the different video frame frequencies of the NTSC and PAL formats.

## Description

The present invention relates to a video/audio data generating method and apparatus for generating video/audio data consisting of a sequence of data frames which convey the contents of a multi-channel video/audio signal (i.e., a parallel combination of a video signal channel and a plurality of associated audio signal channels, referred to in the following simply as a video/audio signal).

In particular the invention relates to a video/audio data generating method and apparatus which enables processing of the generated data to be simplified, by ensuring that such processing can be readily be performed by a single processing system, even when the data may express video/audio signals having respectively different frame frequencies, such as NTSC format and PAL format signals.

In recent years, methods of communicating and broadcasting video/audio signals have become widespread, requiring the use of various types of apparatus for processing video/audio signals in the form of digital data, for such purposes as storage and subsequent readout, or transmitting the data to a remote location, etc. In the following, such types of operation will be broadly referred to as video/audio data processing.

It is frequently necessary for the apparatus to apply such processing to data which express video/audio signals having respectively different frame rates, in particular data expressing a video/audio signal which is in the NTSC format and so has a frame period of approximately 1/30 second (such data being referred to in the following simply as NTSC format data), and data expressing a video/audio signal which is in the PAL format and has a frame period of 1/25 second (such data being referred to in the following simply as PAL format data). In such a case, in the prior art, it has been generally necessary to use two separate systems within the video/audio data processing apparatus for processing the NTSC format data and PAL format data respectively. These separate systems might for example include respectively separate arrangements for storage/readout of NTSC format data and for storage/readout of PAL format data, with the operation of the overall apparatus being switched over between the two systems as required.

This is due to the fact that the length of a NTSC video frame is substantially different from that of a PAL video frame, so that when such video/audio signals are converted to digital data, the control of timing relationships would become extremely complex if it were to be attempted to handle both NTSC format data and PAL format data within a single system.

There is therefore a requirement for an improved type of video/audio data generating apparatus, whereby data expressing both NTSC format video/audio signals and PAL format video/audio signals can be processed in common by a single system, and whereby the control of timings of operations executed in the video/audio data generating apparatus can be simplified.

It is an aim of the present invention to overcome the problems described above, by providing a video/audio data generating method and apparatus whereby data expressing video/audio signals of at least two different signal formats and respectively different frame rates, can be processed in common by a single system, and whereby operations such as storage/readout or transmitting/receiving such data can be more efficiently performed, and management of the timings of data processing operations can be simplified.

According to the present invention, designating the respective frame frequencies of first and second video/audio signals having respectively different formats as N1 and N2, the video and audio information of each frame of a video/audio signal are respectively converted to compressed digital data portions, which are inserted into a corresponding data frame. The ratio of the length of a data frame in the case of said first video/audio signal to the length of a data frame in the case of said second video/audio signal is made substantially equal to N2/N1, i.e. by inserting an appropriate amount of padding data into each data frame to set the frame length to a requisite value. It will be understood that the term "inserting padding data" here simply signifies providing one or more byte positions within a data frame, to which no valid data are allocated. In addition to these padding bytes, and the video and audio information of a corresponding video frame of the video/audio signal, the data frame includes necessary identification information such as a frame header etc.

The basic advantage of the present invention is that a succession of such data frames has substantially the same data rate, irrespective of which of the aforementioned two types of video/audio signals having respectively different frame frequencies is being processed.

In the following, it will generally be assumed that the aforementioned video/audio signals having respectively different formats are an NTSC format signal having the standard NTSC frame frequency, i.e., nominally 30 frames per section (more precisely, 29.97 frames per section), and a PAL format signal having a frame frequency of 25 frames per section. In that case, designating a data frame which contains data of a PAL video/audio signal as a PAL format data frame and a data frame which contains data of a NTSC video/audio signal as a NTSC format data frame, the data configurations within such NTSC format data frames and PAL format data frames are established such that the ratio of the length of a NTSC format data frame to the length of a PAL format data frame is 5/6.

In a practical data storage device for storage of video data, the data are written in and read out from the data storage device in fixed-size unit amounts of data each formed of a fixed number of bytes. When the data storage device is a disk type of data storage device, these unit amounts of data are generally referred to as sectors. When a video/audio data generating apparatus according to the present invention is used to supply video/audio data to such a storage device, the ratio of the number of sectors constituting a NTSC format data frame to the number of sectors constituting a PAL format data frame is made equal to 5:6. In that case, the number of sectors that are transferred to the storage device to be written therein (or are read out from the storage device) within a specific time interval in the case of NTSC format data, becomes substantially identical to the number of sectors that are transferred within that time interval in the case of PAL format data. Thus, management of timings of data processing operations relating to storage and readout of video/audio data can be simplified by comparison with the prior art.

More specifically, the present invention provides a video/audio data generating method for generating a sequence of data frames which convey the contents of a video/audio signal that consists of a video signal channel and a plurality of audio signal channels. Each of of these data frames conveys the video and audio contents of one frame of the video/audio signal, and includes a frame header, with the header including a serial number for identifying the frame.

According to one aspect of the invention, each data frame includes a DIF (Digital Interface Format) section consisting of a combination of data of the video signal and data of at least one of the audio signal channels, and an audio section formed of audio data of a plurality of other ones of the audio signal channels.

According to another aspect of the invention, when the video/audio signal is an analog type of signal, and the audio signal channels are each converted to respective digital signal channels by using a sampling frequency of 48 kHz, then the data frames of the NTSC format video/audio signal are generated as a cyclically repeated sequence of five data frames wherein a first data frame of the sequence conveys data expressing 1600 audio signal samples for each of the audio signal channels and each of the remaining four data frames of the sequence conveys data expressing 1602 audio signal samples for each of the audio signal channels. In that way, in spite of the fact that 48 kHz sampling of the audio signal of an NTSC format video signal does not result in an integral number of audio samples corresponding to each video frame, it is ensured that every five successive data frames will convey an exactly correct integral number of audio samples.

The invention further provides a video/audio data generating apparatus for use in conjunction with a disk type of data storage apparatus, for operating on an analog type of video/audio signal formed of a video signal channel and a plurality of audio signal channels to generate corresponding video/audio data which are configured in a storage format of the data storage apparatus, for supplying the video/audio data to the data storage apparatus to be stored therein, and for performing an inverse operation upon the video/audio data when read out from the data storage apparatus to thereby recover the video/audio signal. Such a video/audio data generating apparatus comprises: analog-to digital and digital-to-analog conversion means for converting the video signal channel and each of the audio signal channels to a digital video signal channel and respective digital audio signal channels and for applying an inverse operation to a digital video signal channel and respective digital audio signal channels when supplied thereto; coding/decoding means for applying encoding processing to convert the digital video signal channel to compressed video data, and to convert each of the digital audio signal channels to corresponding compressed audio data, and for applying an inverse operation to compressed video data and audio data when supplied thereto; control means for defining successive portions of the compressed video data which corresponding to respective video frames of the video signal channel, for outputting the portions as respective serial data streams and, for each of the digital audio channels, defining successive portions of the compressed audio data which corresponding to the respective video frames of the video signal, outputting the successive portions of compressed audio data as respective serial data streams, and applying an inverse operation to serial data streams of compressed video data and compressed audio data when supplied thereto; and stream/disk processing means for receiving the serial data streams, for generating sequential data frames each containing a compressed video data portion corresponding to one of the video frames and containing each of the compressed audio data portions corresponding to the video frame, with each of the frames being configured in a storage format of the data storage apparatus and having a length that is an integral number of sectors of the data storage apparatus, and for applying an inverse operation to data frames which are read out from the data storage apparatus to thereby reproduce the serial data streams and supply the streams to the control means.

The present invention will be described further below with reference to an exemplary embodiment and the accompanying drawings, in which:
Fig. 1 is a general system block diagram showing an embodiment of a video/audio data generating apparatus according to the present invention used in conjunction with a video/audio data storage device;
Fig. 2 is a system block diagram showing the internal configuration of a video/audio processing section and a stream/disk processing section of the embodiment of Fig. 1;
Figs. 3A, 3B, 3C respectively show examples of configurations of NTSC and PAL data frames and the configuration of each of respective data sections within a data frame;
Figs. 4A, 4B are respective tables showing the data structure within a NTSC data frame and a PAL data frame respectively;
Figs. 5A, 5B are respective tables showing the data structure of a frame header, for a NTSC data frame and a PAL data frame respectively;
Figs. 6A, 6B are respective tables showing the data structure of an audio data sub-section within a data frame, for a NTSC data frame and a PAL data frame respectively;
Figs. 7A, 7B are respective tables showing the data structure of a DIF data section within a data frame, for a NTSC data frame and a PAL data frame respectively;
Fig. 8 is a conceptual timing diagram for use in describing the start of a process of supplying sets of header data and compressed video and audio data to a stream/disk processing section, to be used in generating a sequence of data frames conveying the contents of a NTSC video/audio signal;
Fig. 9 is a conceptual timing diagram for use in describing the end of the process of supplying sets of header data and compressed NTSC video and audio data to the stream/disk processing section; and
Fig. 10 is a partial flow diagram, for use in describing the start of the process of supplying sets of header data and compressed NTSC video and audio data to the stream/disk processing section.

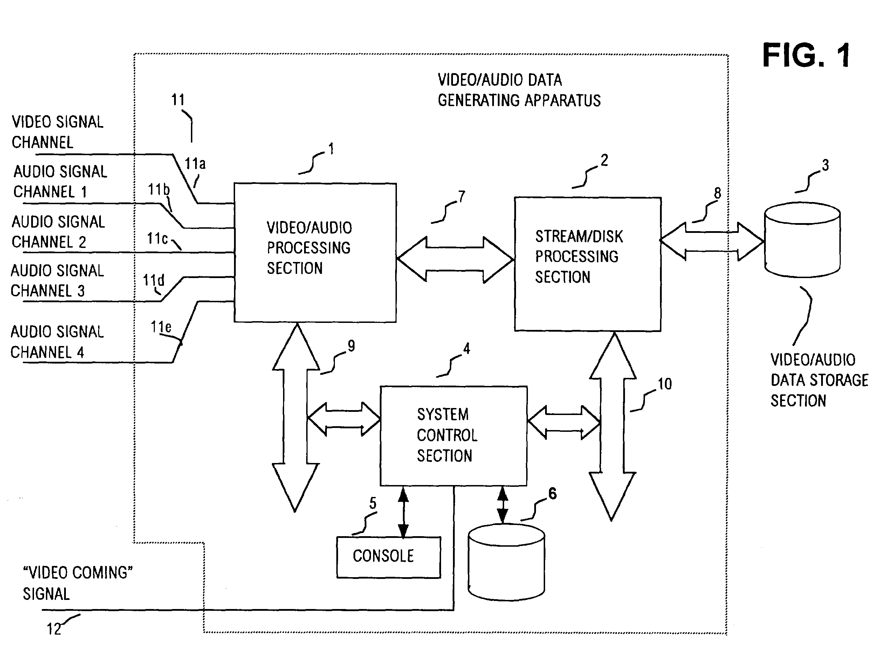

An embodiment of the invention will be described in the following, referring to the drawings. Fig. 1 is a general system block diagram of a video data processing apparatus which incorporates an embodiment of a video/audio data generating apparatus according to the present invention. The function of the system is to record a video/audio signal by conveying the video/audio signal contents in data which are stored in a disk storage device 3, and to subsequently recover the video/audio signal by reading out the stored data. Although with this embodiment a disk storage device is used as the data storage device for holding video/audio data, with the aforementioned unit amounts of data therefore consisting of sectors, it will be understood that it would be equally possible to utilize various other forms of data storage device for that function.

As shown in Fig. 1, the video/audio data generating apparatus of this embodiment is formed of a video/audio processing section 1, a stream/disk processing section 2, a system control section 4, a console 5 and a control program storage section 6, together with an I/O (input/output) interface section 11, a video/audio processing section 1, and data and control buses 7,8, 9, 10.

In Fig. 1, an analog video/audio signal consists of a video signal channel and four audio signal channels, which are respectively designated as audio signal channels 1 to 4, with these signal channels being inputted to the video/audio processing section 1. The video/audio processing section 1 performs A/D conversion of the input signal channels to obtain respective digital video signal channel and digital audio signal channels, applies encoding to compress these, and outputs resultant sets of compressed data corresponding to respective frames of the video/audio signal as serial data streams at appropriate timings, as described hereinafter, to be inserted into respective data frames, while also generating respective header information for the data frames.

Numeral 2 denotes a stream/disk processing section which generates each of successive data frames by combining the aforementioned header and compressed sets of video/audio data corresponding to a video signal frame, produced from the video/audio processing section 1, with an appropriate number of padding bytes. The data frames thereby obtained are transferred via an interface to the video/audio data storage device 3, to be stored therein, while data frames read out from the video/audio data storage device 3 are similarly transferred in the opposite direction via that interface. In the description of this embodiment, it will be assumed that this function is performed by a SCSI (Small Computer System Interface) interface. The system control section 4 performs overall control of the apparatus. The console 5 enables a user to input various types of processing commands and data to the system control section 4. The control program storage section 6 stores various programs for executing the control operations of the system control section 4. 7 denotes a set of data buses for transferring video/audio data and header information between the video/audio processing section 1 and the stream/disk processing section 2. 8 denotes a recording data transfer bus for transferring a series of data frames between the stream/disk processing section 2 and the video/audio data storage device 3. 9 denotes a first control bus, which will be assumed to be an ISA (Industrial Standard Architecture) bus, for transmitting and receiving control signals and data between the video/audio processing section 1 and the system control section 4. 10 denotes a second control bus, which will be assumed to be a PCI (Peripheral Component Interconnection) bus, for transmitting and receiving control signals and data between the stream/disk processing section 2 and the system control section 4. 11 is a video/audio data I/O section for inputting and outputting video/audio data to/from the video/audio processing section 1, and includes a video signal I/O port 11a for the aforementioned video signal channel and four audio signal I/O ports 11b, 11c, 11d and 11e, for the audio signal channels 1 to 4 respectively.

The control program storage section 6 may be implemented as a disk recording device or other type of data memory device.

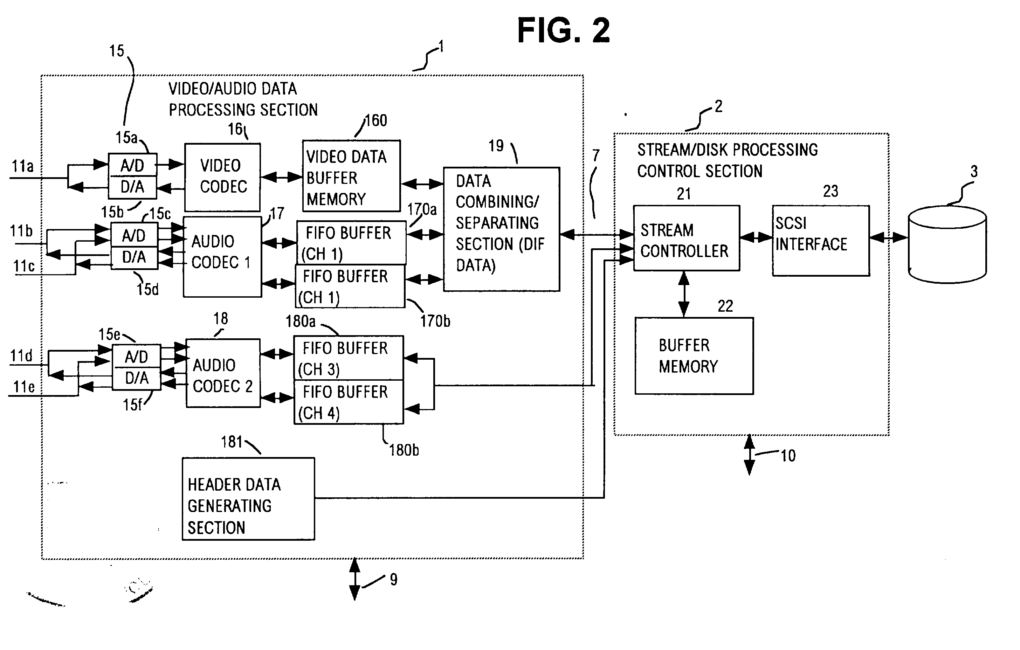

Fig. 2 is a block diagram showing greater detail of the configurations of the video/audio processing section 1 and of the stream/disk processing section 2 of the apparatus of Fig. 1. As shown in Fig. 2, the video/audio processing section 1 includes a data conversion section 15 which converts the respective channels of a video/audio signal which are supplied via the video/audio data I/O section 11 to suitable form for being processed by the video/audio processing section 1 (i.e., in this embodiment, analog-to-digital conversion), and converts video/audio data which have been processed within the apparatus to a suitable form for being output from the video/audio data I/O section 11 (i.e., in this case, digital-to-analog conversion). As shown, the data conversion section 15 is made up of an A/D (analog-to-digital) converter section 15a for converting the video signal channel supplied thereto from I/O port 11a to a digital video signal channel, and a D/A converter section 15b which applies the inverse function to a digital video signal channel supplied thereto, an A/D converter section 15c for converting the audio signal channel 1 supplied thereto from I/O port 11b to a corresponding digital audio sig (referred to in the following as digital audio signal channel 1) and for converting the audio signal channel 2, supplied thereto from I/O port 11c, to digital audio signal channel 2, and a D/A converter section 15b which applies the inverse function to a digital audio signal channel 1 and digital audio signal channel 2 supplied thereto, an A/D converter section 15e for converting the audio signal channel 3supplied thereto from I/O port lid to a corresponding digital audio sig channel 3 and for converting the audio signal channel 4, supplied thereto from I/O port 11e, to a digital audio signal channel 4, and a D/A converter section 15b which applies the inverse function to a digital audio signal channel 3 and digital audio signal channel 4 supplied thereto.

A video codec (i.e., coder/decoder section) 16 performs encoding of the digital video signal channel that is output from the A/D converter section section 15a to convert the video signal contents to compressed video data, and applies the inverse decoding processing operation to compressed video data supplied thereto. The audio codec 17 performs encoding of each of the digital audio signal channels 1 and 2 which are produced from the A/D converter section section 15c, to convert each of these digital signals to compressed audio data. The audio codec 18 similarly performs encoding of each of the digital audio signal channels 3 and 4 which are produced from the A/D converter section section 15e, to convert each of these digital signals to compressed audio data.

Video data which have been produced from the video codec 16 or are to be transferred to the video codec 16 are written into a video data buffer memory 160, while the audio data corresponding to the audio signal channels 1 and 2 are written into FIFO (first in, first out) buffers 170a, 170b respectively, which are coupled to the audio codec 17 as shown, and the audio data corresponding to the audio signal channels 3 and 4 are similarly written into FIFO buffers 180a, 180b respectively, coupled to the audio codec 18. A data combining/separating section 19 combines the video data which are read out from the video data buffer memory 160 with the audio data which are read out from the FIFO buffers 170a, 170b, to obtain sets of composite video/audio data, i.e., DIF data, and also applies the inverse operation to DIF data which are supplied thereto. Here, the term DIF refers to the Digital Interface Format, which is a data format that has been developed for serial transmission of digital video and audio data, in the form of data blocks each containing interleaved video data blocks and audio data blocks.

The video/audio processing section 1 further includes a header data generating section 181 which generates information for use in generating the respective frame headers of data frames.

As shown, the data bus 7 shown in Fig. 1 actually consists of three buses, for respectively transferring DIF data between the the data combining/separating section 19 and a stream controller 21 of a stream/disk processing section 2, transferring audio data between the the FIFO buffers 180a, 180b and the stream controller 21, and transferring the header information from the header generating section 181 to the stream controller 21.

In addition to the stream controller 21, the stream/disk processing section 2 includes a buffer memory 22 which is controlled by the stream controller 21, for temporarily holding data which are to be transferred between the video/audio data storage device 3 and the stream controller 21, and a SCSI interface 23 for transferring data between the video/audio data storage device 3 and the stream controller 21.

The basic operation of this embodiment is as follows, in the case of recording a video/audio signal. When the recording operation is to begin, at the point when the video/audio signal is to start to be supplied to the input ports 11a to 11e from an external source, that external source also generates a "video coming" signal which is supplied to the system control section 4 via an input line 12 as shown in Fig. 1, whose purpose is to enable the video/audio data generating apparatus to synchronize its operations with the timings of successive video frames of the input signal. As the digital data derived by A/D conversion of the video and audio signal channels are derived by the data conversion section 15 for the first frame of the received video/audio signal, the data are subjected to compression/encoding in the video codec 16, audio codec 17 and audio codec 18 respectively. The resultant video data are written into the video data buffer memory 160, the resultant audio data of the audio signal channels 1 and 2 are written into the FIFO buffers 170a, 170b respectively, and the audio data of the audio signal channels 3 and 4 are written into the FIFO buffers 180a, 180b respectively. The audio data of the audio signal channels 3 and 4, corresponding to the first frame of the input video/audio signal, are then read out from the FIFO buffers 180a, 180b and successively transferred as a serial data stream to the stream controller 21 of the stream/disk processing section 2. In addition, information for use in generating a header which is to be inserted in the first data frame is generated by the header generating section 181 and is also supplied to the stream controller 21. The video data of the first frame are then read out from the video data buffer memory 160 and the audio data of the audio signal channels 1 and 2, corresponding to the first frame, are read out from the FIFO buffers 170a, 170b, and these video data and audio data are combined to form a set of DIF data by the data combining/separating section 19. The DIF data are then transferred as a serial data stream to the stream controller 21 of the stream/disk processing section 2.

In the stream/disk processing section 2, the stream controller 21 operates on the data thus supplied, to generate a data frame corresponding to the received video frame. The data frame contains the aforementioned header, the DIF data, and the audio data of the audio signal channels 3 and 4, together with a predetermined number of padding bytes which are inserted to make the frame length become equal to a predetermined number of unit amounts of data of the data storage device, i.e., in this embodiment, a predetermined number of sectors.

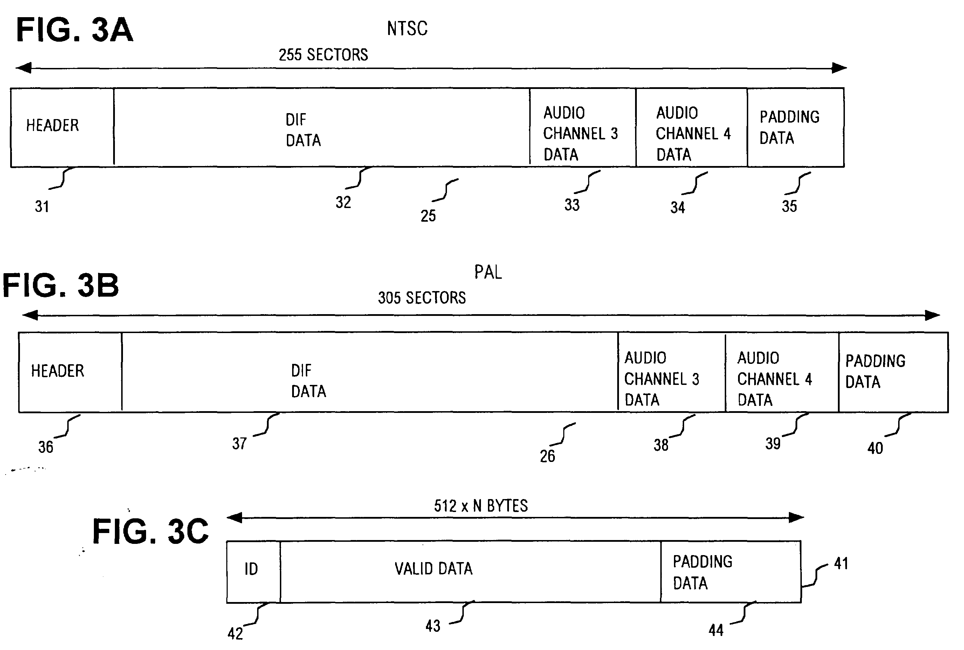

Figs. 3A, 3B, 3C illustrate the data configurations of data frames which are generated by the video/audio processing section 1 of this embodiment. Fig. 3A shows the configuration of an NTSC format data frame 25 (referred to in the following simply as an NTSC data frame). This is formed of a header 31, a DIF data portion 32, a channel 3 audio data portion 33, a channel 4 audio data portion 34, and a padding portion 35. The portions 33 and 34 of channel 3 audio data and channel 4 audio data will be referred to as the audio sub-sections A and B respectively.

Fig. 3B shows the data configuration of a PAL format data frame 26 (referred to in the following simply as a PAL data frame). This is formed of a header 36, a DIF data portion 37, a channel 3 audio data portion 38 (audio sub-section A), a channel 4 audio data portion 39 (audio sub-section B), and a padding portion 40.

With this embodiment, the number of sectors in a NTSC data frame is 255, and is 306 in the case of a PAL data frame. However it should be noted that the respective numbers of sectors in the NTSC data frame 25 and the PAL data frame 26 are not necessarily limited to these specific values. The essential point is that the ratio of the number of sectors constituting a NTSC data frame to the number of sectors constituting a PAL data frame (assuming that the ratio of the frame frequencies of PAL and NTSC format video signals is close to 5/6) must be made substantially equal to 5/6, i.e., by inserting appropriate numbers of padding bytes into each PAL and NTSC data frame. This ratio is achieved, with the present embodiment, by using the above values of 255 and 306 sectors respectively.

With this embodiment, the size of each sector is 512 bytes. The configuration of each of the DIF and audio data portions in each data frame, such as the DIF data portion 32, the audio channel3 portion 33 (i.e., audio sub-section A), etc., is conceptually illustrated in Fig. 3C, as the data block 41. This is formed of an integral number of the 512-byte sectors, and is made up of an ID (identifier) portion 42, a valid data portion 43, and a padding portion 44.

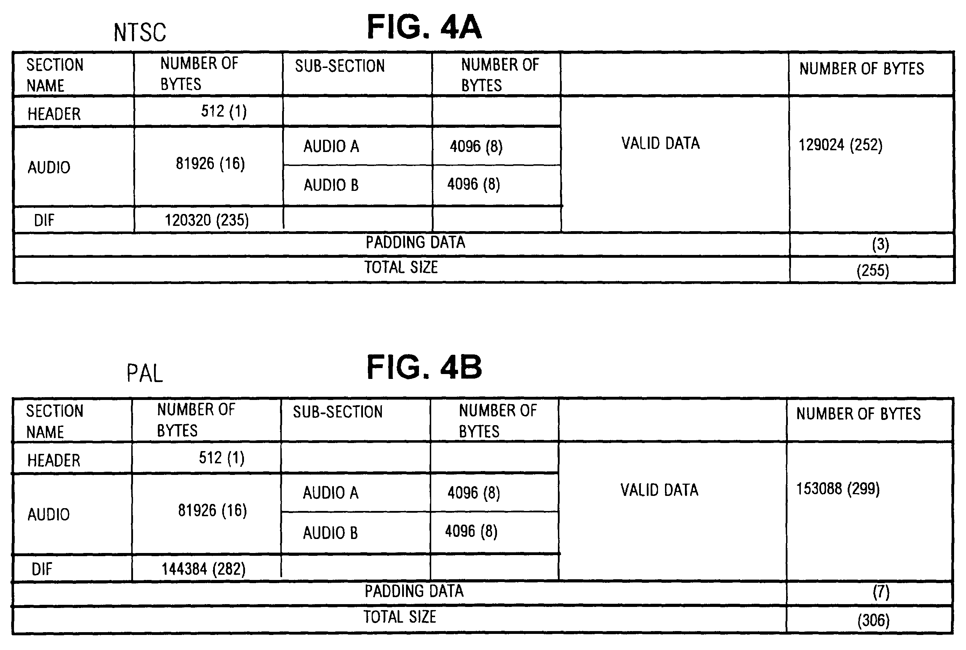

The respective contents of a NTSC data frame and of a PAL data frame will be described in more detail in the following, while continuing to use the reference numerals for various data portions of a frame which are shown in Figs. 3A, 3B. Firstly, the NTSC data frame 25 will be described, referring to Fig. 4A. This illustrates the contents of the data frame, in the form of a table. In that table, each value which is shown enclosed within round brackets, beside a number of bytes, expresses the equivalent number of sectors. As shown, the header of the NTSC data frame 25 is is formed of one sector, while there are 16 sectors of audio data, i.e., 8 sectors of channel 3 audio data (audio A) 33, and 8 sectors of channel 4 audio data (audio B) 34. The DIF data 32 portion is formed of 235 sectors, and the padding portion 35 is formed of 3 sectors. The total number of sectors constituting the NTSC data frame 25 is thus 255.

The PAL data frame 26 will be similarly described, referring to Fig. 4B. As shown, the header of the PAL data frame 26 is formed of one sector, while there are 16 sectors of audio data, i.e., 8 sectors of channel 3 audio data (audio A) 38, and 8 sectors of channel 4 audio data (audio B) 39. The DIF data portion 37 is formed of 282 sectors, and the padding portion 40 is formed of 7 sectors. The total number of sectors constituting the PAL data frame 26 is thus 306.

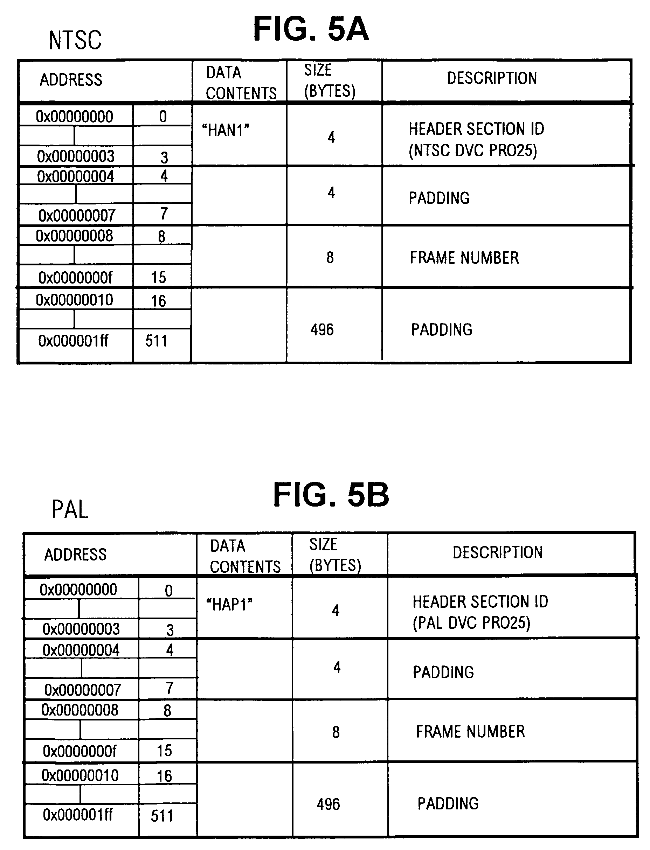

The header of each of the above types of data frame will be described in the following, considering first the header 31 of the NTSC data frame 25. Fig. 5A shows the configuration of this header 31. As described previously, this is formed of a single sector, i.e., 512 bytes. In each of the sections of a data frame, i.e., the frame header, the DIF data section, and the audio data sections, respective byte positions will be designated successively as "address 0, address 1, ... " from the start of that section. Of the bytes constituting this header 31, the bytes from address 0 to address 3 contain a header ID, while the bytes from address 4 to address 7 are used as padding, and data expressing the frame number that has been assigned to the frame is contained in the bytes from address 8 to 15, while the bytes extending from address 16 to address 511 are used for padding, to set the length of the header to the predetermined value, i.e., 306 sectors.

The header 36 of the PAL data frame 26 will now be described, referring to the table of Fig. 5B. As described previously, the header 36 is formed of a single sector (512 bytes), as for the header 31. In the header 36, the bytes from address 0 to address 3 contain a header identifier ID, while the bytes from address 4 to address 7 are used as padding, and data expressing the frame number that has been assigned to the frame is contained in the bytes from address 8 to address 15. the bytes from address 16 to address 511 are used as padding bytes, to set the length of the header to the predetermined value.

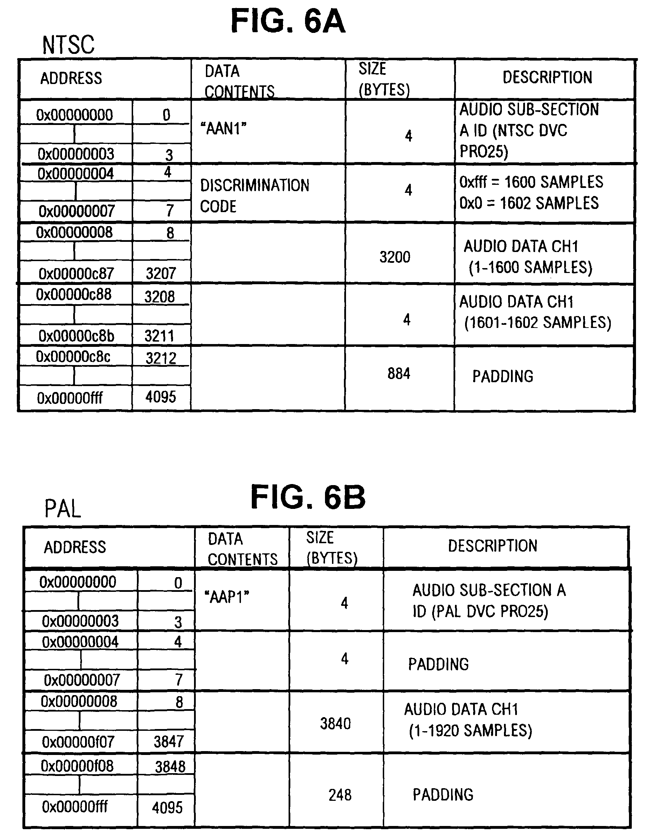

The configuration of the audio data portions of each data frame will now be described, for the two formats. Firstly, the data configuration of the channel 3 audio data portion (audio sub-section A) 33 within the NTSC data frame 25 will be described, referring to the table of Fig. 6A. As shown, the audio data portion 33 is formed of 8 sectors (4096 bytes) of data. Of these data, an audio sub-section identifier ID is expressed by the 3 bytes extending from address 0 to address 3. In this example, the ID is expressed as the data "AAN1". These characters indicate that this is an audio sub-section, that it is sub-section A, and that the compression/encoding method which has been applied to the digital data is the type NTSC DVC PRO25. In the next portion, from address 4 to address 7 contains either the data "0xffff" or "0x0", as a sample number discrimination code, which specifies the number of samples conveyed by that audio data portion. That is to say, if the sample number discrimination code is "0xffff", this indicates that the audio data portion expresses 1600 audio signal samples (i.e., as its "valid data" portion 43 shown in Fig. 3C), while if the sample number discrimination code is "0x0", this indicates that this audio data portion expresses 1602 audio signal samples. The reason for this is as follows. As is usual in digital video technology, an audio data sampling frequency of 48 kHz is used in the data conversion section 15 for conversion of each of the audio signal channels. In the case of the NTSC format the field frequency is set as 59.94 fields/second so that the actual number of frames which occur in one second is 29.97. Hence, with a 48 kHz sampling frequency, the number of samples corresponding to one frame is not an integer. For that reason, successive sequences of five data frames are generated with this embodiment in the case of recording a NTSC video/audio signal. In one frame out of each such sequence of five data frames, only 1600 samples are conveyed by that frame for each of the four audio signal channels, while each of the other data frames in that sequence of five data frames conveys 1602 samples of each audio signal channel. As a result, a total of 8008 audio samples are conveyed for each audio signal channel by five data frames, i.e., 48,048 samples are conveyed by 30 frames. Since with a 48 kHz audio sampling frequency for A/D conversion the required number of audio samples that corresponds to 30 NTSC format frames is exactly 48,000 x(30/29.97), i.e., 48,048 samples, correct operation is achieved.

It can thus be understood that the code "0xffff" or "0x0" identifies whether the audio data sub-section is that of a data frame which conveys 1600 or 1602 samples for each audio signal channel. In practice, this code indicates whether or not the bytes of address numbers 3208 to 3211 contain valid data.

The 1600 successive audio data samples are conveyed by the data of the bytes from address 8 to address 3207. The audio data samples 1601 to 1602 are contained in the bytes from address 3208 to address 3211, and the bytes from address 3212 to 4095 are used as padding bytes, to set the length of the audio sub-section to the specified value.

The configuration of the audio data sub-section 38 (audio sub-section A) of the audio section of the PAL data frame 26 will be described referring to Fig. 6B. The audio data sub-section 38 is formed of 8 sectors, i.e., 4096 bytes. Of these, the three bytes from address 0 to address 3 contain the audio sub-section identifier ID, which in this example is expressed as the data "AAP1". These characters indicate that this is an audio sub-section, that it is sub-section A, and that the compression/encoding method which has been applied to the data is the type PAL DVC PRO25. The portion from address 4 to address 7 contains padding bytes, and 1290 successive audio samples are conveyed by the data of the bytes from address 8 to address 3847. The bytes from address 3848 to address 4095 also constitute padding bytes, to set the data length of the audio sub-section to the specified value.

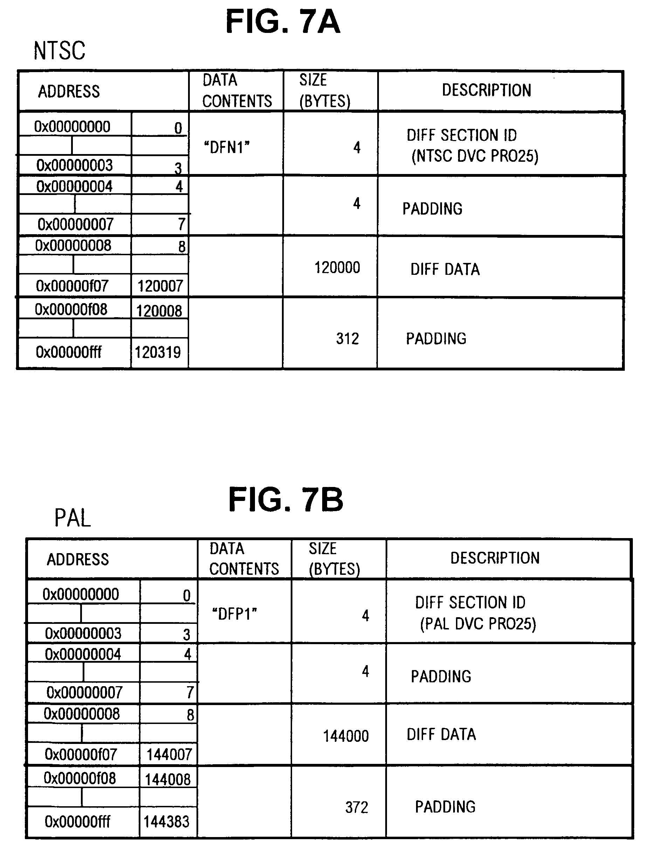

The configuration of the DIF section of each data frame will now be described, for both the NTSC and PAL formats. Firstly the configuration of the DIF section 32 of the NTSC data frame 25 shown in Fig. 3A will be described, referring to Fig. 7A. This DIF section 32 is formed of 235 sectors, i.e., 120320 bytes. Of these, the bytes from address 0 to address 3 contain a section identifier ID, which in this example is expressed as the data "DFN1". These characters indicate that this is a DIF data section, and that the compression/encoding method which has been applied to the data is the type NTSC DVC PRO25. The bytes from address 4 to address 7 are padding bytes, and DIF data are contained in the 120,000 bytes from address 8 to address 120007, while the bytes from address 120008 to address 120319 also constitute padding bytes, to make the length of the DIF section 32 the specified value.

Next, the configuration of the DIF section 37 of the PAL data frame 26 shown in Fig. 3B will be described referring to Fig. 7B. This DIF section is formed of 282 sectors, i.e., 144384 bytes. Of these, the bytes from address 0 to address 3 contain a section identifier ID which in this example is expressed as the data "DFP1". These characters indicate that this is a DIF data section, and that the encoding method which has been applied in conversion to digital data is the type PAL DVC PRO25. The bytes from address 4 to address 7 are padding bytes, and DIF data are contained in the 144,000 bytes from address 8 to address 144007, while the bytes from address 144008 to address 144383 also constitute padding bytes, to make the length of the DIF section 37 the specified value.

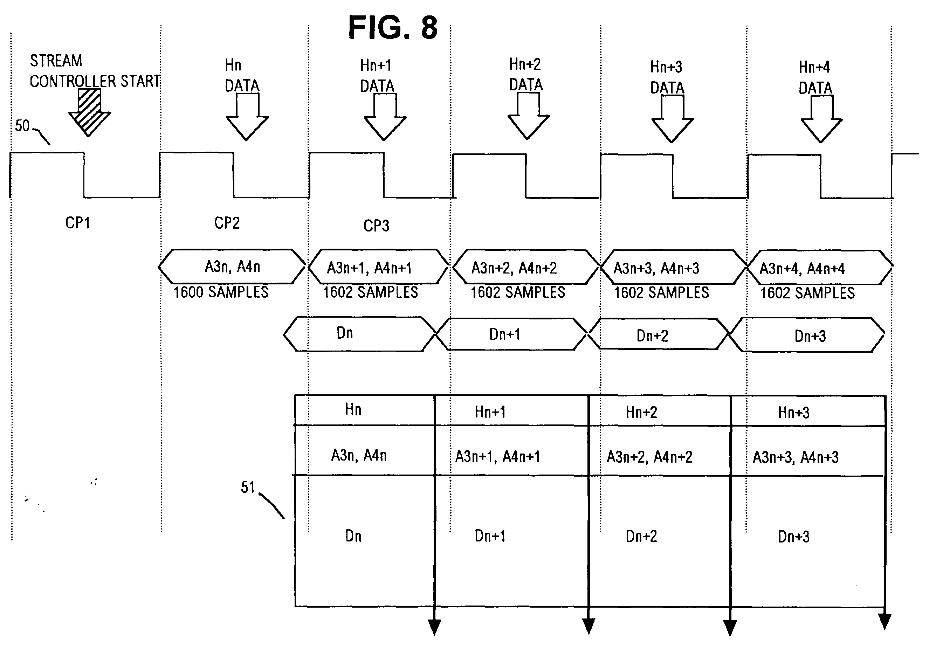

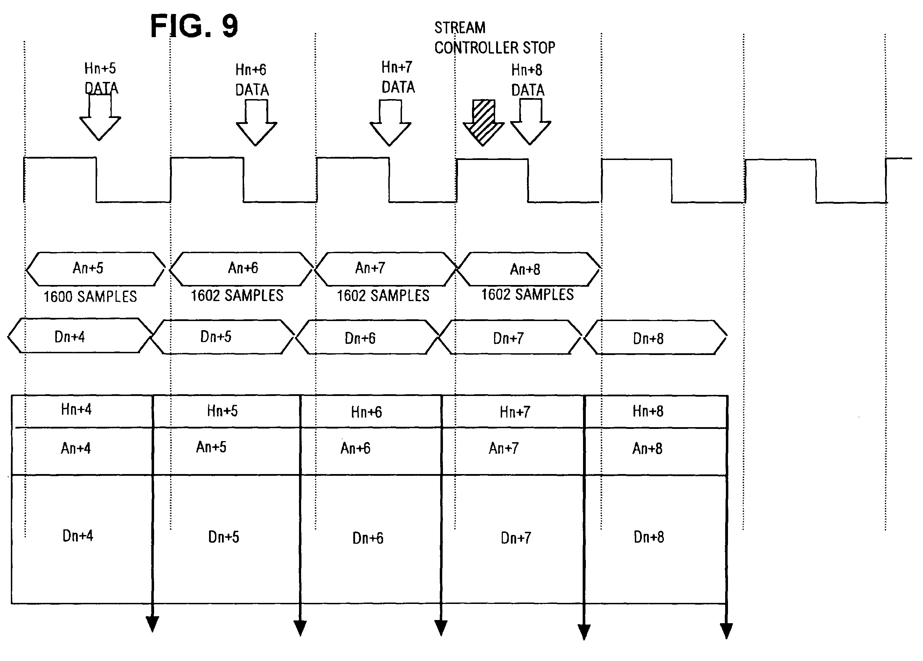

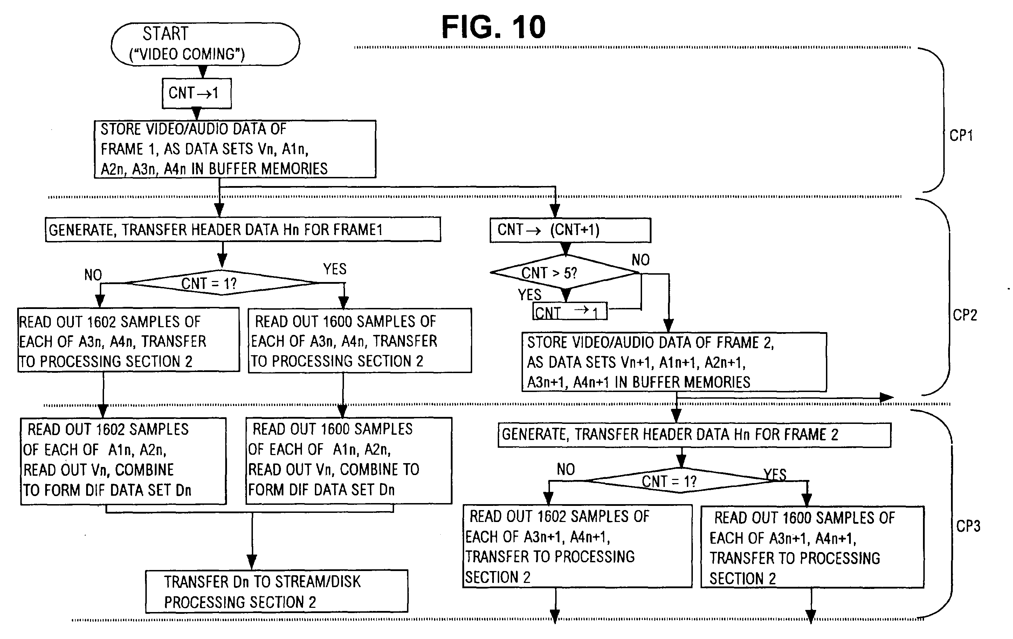

The process of recording a video/audio signal by this embodiment, taking the case of a NTSC signal,will be described in greater detail in the following, referring to the conceptual timing diagram of Fig. 8, which illustrates the start of a data recording operation, and Fig. 9 which illustrates the end of a data recording operation, and also the partial flow diagram of Fig. 10 which illustrates the operations performed by the video/audio processing section 1 for supplying serial streams of DIF data and audio data for respective frames to the stream/disk processing section 2 at appropriate timings.

The process of transferring data from the video/audio processing section 1 to the stream/disk processing section 2 during recording, i.e., during storage of video/audio data, and the inverse process of transferring data which have been read out from the video/audio data storage device 3 from the stream/disk processing section 2 to the video/audio processing section 1, are both controlled based on a clock signal which will be referred to as the system clock signal. The frequency of the system clock signal is held locked at the frame frequency of the video/audio signal whose data are being stored or read out, and the start of each clock signal period is synchronized with the start of a corresponding frame of the video/audio signal. Since methods of achieving such types of synchronization are well known, detailed description will be omitted. It will be assumed that prior to the start of recording a video/audio signal, an operator uses the console 5 to input information for notifying the system control section 4 as to whether the signal to be recorded is of NTSC or PAL format, although of course other arrangements for providing such notification automatically could easily be envisaged. At the point when that video/audio signal is about to begin to be supplied to the I/O section 11 from an external source, that external source supplies a "video coming" signal to the system control section 4, which thereafter begins to generate the system clock signal such that the start of the first period of that clock signal coincides with the start of the first video frame of the received video/audio signal. The clock signal frequency is set as 29.97 Hz in this example, since a NTSC format signal is to be recorded. In the first period of the system clock signal, a counter value designated as CNT is initialized to 1. That counter thereafter varies between 1 and 5, i.e., sequentially takes values of 1, 2, 3, 4, 5, 1, 2, 3, 4, 5, ... in successive system clock signal periods.

The video and audio data of the first frame of the received video/audio signal are then derived by the video/audio processing section 1 as described hereinabove, and stored respectively in the video data buffer memory 160, the FIFO buffers 170a, 170b and the FIFO buffers 180a, 180b during that first clock signal period CP1.

In the next system clock signal period CP2, a step of judging the value of counter CNT is performed which is executed for each of the frames, to judge whether a data frame is to be generated which conveys 1600 samples for each of the four audio signal channels, or conveys 1602 samples for each channel. At this point, CNT is equal to 1, so that respective sets of audio data expressing 1600 successive audio samples (designated as A3n, A4n in Fig. 10), i.e. corresponding to audio signal channels 3 and 4 respectively, are read out sequentially from the FIFO buffers 180a, 180b and transferred as a serial data stream to the stream controller 21 of the stream/disk processing section 2. In addition, the header information Hn for the first frame is generated by the header generating section 181 and supplied to the stream controller 21 of the stream/disk processing section 2.

Also during that second clock signal period, CNT is incremented by 1, and the video and audio data of the second video frame of the received video/audio signal are derived and transferred to the video data buffer memory 160, FIFO buffers 170a, 170b and FIFO buffers 180a, 180b.

In the next clock signal period CP3, data expressing 1600 samples for each of the audio signal channels 1 and 2 (designated as A1n, A2n in Fig. 10), for the first frame, are read out from the FIFO buffers 170a, 170b and supplied to the data combining/separating section 19, while the video data of the first frame are read out from the video data buffer memory 160 and supplied to the data combining/separating section 19, which combines these to form a DIF data set (designated as Dn in Figs. 8 and 10. That DIF data set is then transferred as a serial data stream to the stream controller 21 of the stream/disk processing section 2.

Also during that period CP3, a decision is made as to whether 1600 or 1602 samples are to be conveyed by the second data frame, for each of the audio signal channels 1 to 4. In this case, since the value of CNT has been incremented to 2, 1602 samples are to be conveyed, and so the next set of 1602 samples (A3n+3, A3n+4) are read out for each of the audio signal channels 3 and 4, from the FIFO buffers 180a, 180b, and supplied to the stream controller 21 of the stream/disk processing section 2.

Portion 51 of Fig. 8 conceptually illustrates how the header, audio, and DIF data corresponding to each of the successive video frames are received by the stream/disk processing section 2, to be incorporated into corresponding data frames which are supplied to the video/audio data storage device 3 via the SCSI interface 23 and stored therein.

As can be understood from the above, each of the FIFO buffers 170a. 170b, 180a, 180b performs a data shift register function, whereby audio data are continuously being shifted in, with a set of data expressing either 1600 or 1602 audio samples being shifted out once in each system clock signal period.

Also, in practice, as can be understood from Fig. 8, the formation of a set of DIF data of a frame can be performed concurrently with the transfer of the audio channel 3 and channel 4 data corresponding to that frame to the stream/disk processing section 2, and transfer of that set of DIF data to the stream/disk processing section 2 can begin before that transfer of audio data has been completed. This will ensure that the stream controller 21 will have sufficient time to complete the formation of the corresponding data frame before the start of the next system clock signal period. In that way for example, referring to Fig. 8, transfer of the DIF data set Dn to the stream controller 21 for use in generating the first data frame can be started during the second clock period CP2, partially overlapping with transfer of the audio data sets A3n, A4n of that first frame to the stream controller 21. It can thus be ensured that acquisition of all of the header, audio and DIF data (Hn, A3n, A4n, Dn) which are necessary for generating the first data frame will have been completed by the stream controller 21 prior to the end of the third system clock signal period CP3.

As the stream controller 21 generates successive parts of a data frame, these are temporarily held in the buffer memory 22. When the entire data frame has been configured, it is read out from the buffer memory 22 and transferred via the SCSI interface 23 to the video/audio data storage device 3 to be stored therein.

When the recording operation is to be halted, as illustrated in Fig. 9, for example in response to an input command from the console 5, the system control section 4 supplies a control signal to the stream/disk processing section 2, whereby a "stop" signal is output from the stream controller 21 of the stream/disk processing section 2, with the generation of that "stop" signal being synchronized with the timing of the clock period corresponding to a data frame such as frame Hn+7 of Fig. 8, i.e., a frame which is the fourth data frame of one of the aforementioned sets of five successive data frames conveying respectively, 1600, 1602, 1602, 1602 and 1602 audio samples respectively. Data continues to be transferred and stored during the clock period corresponding to the next data frame, Hn+8. When the video/audio data corresponding to all of the frames up to and including data frame Hn+8 have been stored in the video/audio data storage device 3, the recording operation is halted, i.e., transfer of data frames from the stream controller 21 to the video/audio data storage device 3 is ended.

It will be understood that the recording operation in the case of a PAL video signal will be similar to that described above, but with a fixed number of audio samples being transferred from the video/audio processing section 1 to the stream/disk processing section 2 for each audio channel, in each system clock signal period.

To recover a recorded video/audio signal, operations are performed which are the inverse of those described for the case of recording. In this case, in the same way as for the recording process, the operation timings are controlled based on the system clock signal. In that case, successive data frames are read out from the video/audio data storage device 3, the DIF and audio data contents of each frame are extracted by the stream controller 21 and supplied as serial data streams to the combining/separating section 19 and buffers 180a, 180b, the DIF data of each data frame are separated into video and audio data, the video and audio data of decoded/decompressed to obtain the respective digital signal channels, and D/A conversion is then performed to recover the original analog signal channels.

With the type of recording operation described above, the ratio of the number of sectors constituting one NTSC data frame to the number of sectors constituting one PAL data frame is made equal to 5:6. Hence, the amount of data that are transferred per second during a recording operation can be made substantially identical for both NTSC format data and PAL format data. That is to say, when 29.97 frames per second of NTSC format data are being transferred to be stored in the video/audio data storage device 3, the rate of data transfer is substantially identical to that which occurs when 25 frames per second of PAL format data are being transferred. As a result, bandwidth requirements for a video signal recording and playback apparatus can be easily established, and management of data transfer can be easily performed.

As can be understood from the above, the invention provides the following basic advantages:
(1) Since each data frame is identified individually, if the data frames have been written into a data storage apparatus, then any desired data frame or group of data frames can easily be selected to be read out from storage, in order to process the video data and/or the audio data of that data frame or group of data frames as required.
(2) Irrespective of whether the data frames convey NTSC or PAL video/audio data, the internal configuration of each data frame is substantially identical, and the data rate at which data frames are transferred between respective sections within a processing apparatus is also substantially identical. Hence, it becomes possible to perform processing of both PAL and NTSC audio data by a single system.

Although the invention has been described in the above for the case in which a video/audio data generating apparatus according to the present invention is used to supply data to a disk type of data storage device, so that the data frames are each configured as an integral number of sectors, the invention is not limited to such an application. If the data which are generated by the video/audio data generating apparatus are to supplied to or transmitted to an apparatus which operates on units of bytes, for example, then it is only necessary that each data frame be configured as an integral number of bytes.

Furthermore, although in the description of this embodiment it is assumed that the input video/audio signal is of analog type, it will of course be apparent that the invention could equally be applied to processing a digital video/audio signal.

## Claims

1. A video/audio data generating method for generating video/audio data conveying the contents of a video/audio signal formed of a video signal channel and a plurality of audio signal channels, characterized in that said video/audio data comprises a succession of data frames, each of said data frames including a DIF (Digital Interface Format) section consisting of a combination of data of said video signal and data of at least one of said audio signal channels, an audio section formed of audio data of a plurality of other ones of said audio signal channels, and a header for identifying said data frame.

2. The video/audio data generating method according to claim 1, wherein the data of each of said sections are configured as an integral number of fixed-size standard unit data amounts which are predetermined as being standard data storage unit amounts of a specific form of data storage apparatus, and wherein the ratio of the total length of each of said data frames, in the case of said video/audio signal being a NTSC (National Television System Committee) format signal, to the total length of each of said data frames in the case of said video/audio signal being a PAL (Phase Alternation Line) format signal having a frame frequency of 25 frames per second, is made equal to 5/6, as measured as respective numbers of said standard unit data amounts.

3. The video/audio data generating method according to claim 2, wherein said data storage apparatus is a disk type of data storage apparatus, and wherein said standard unit data amounts are sectors, each formed of a fixed number of bytes.

4. The video/audio data generating method according to claim 2 or 3, wherein each of said frames includes padding data, with the amount of said padding data being predetermined such as to make said ratio of the number of standard unit data amounts in the case of a data frame which conveys NTSC format data to the number of standard unit data amounts in the case of a data frame which conveys PAL format data become equal to 5:6.

5. The video/audio data generating method according to claim 2, 3 or 4, wherein said header of a data frame contains a frame number which has been assigned to that data frame, with the frame number being in the form of data.

6. The video/audio data generating method according to claim 2, 3, 4 or 5 wherein said audio data of each of said audio signal channels is derived using a sampling frequency of 48 kHz in the case of an NTSC format video/audio signal, and wherein said data frames of said NTSC format video/audio signal are generated as a cyclically repeated sequence of five data frames wherein a first data frame of said sequence conveys data expressing 1600 audio signal samples for each of said audio signal channels and each of the remaining four data frames of said sequence conveys data expressing 1602 audio signal samples for each of said audio signal channels.

7. A video/audio data generating method for generating a succession of data frames conveying the contents of an analog video/audio signal formed of a video signal channel and four audio signal channels, comprising steps of:
respectively converting each of said analog video signal channel and said plurality of audio signal channels to a corresponding digital video signal channel and digital audio signal channels,
applying encoding to each of said digital video signal channel and digital audio signal channels to obtain compressed video data corresponding to said digital video signal channel and compressed audio data respectively corresponding to each of said digital audio signal channels,
for each video frame of said video/audio signal, generating header information for identifying a data frame,
combining a portion of said compressed video data corresponding to said video frame and respective portions of said compressed audio data of first and second ones of said digital audio signal channels, corresponding to said video frame, to obtain a set of combined video/audio data,
selecting respective portions of said compressed audio data of third and fourth ones of said digital audio signal channels, corresponding to said video frame, as an audio data set, and
generating said data frame as a sequence of sections respectively formed of said header information, said combined video/audio data set, and said audio data set.

8. The method according to claim 7, wherein said combined video/audio data set is derived as DIF (Digital Interface Format) data.

9. The method according to claim 7 or 8, further comprising a step of inserting a predetermined amount of padding data into each of said data frames, to set the length of said data frame to a predetermined value.

10. The method according to claim 7, 8 or 9, for processing a PAL format video/audio signal and a NTSC format video/audio signal having a ratio of respective frame frequencies thereof which is substantially equal to 5/6, wherein a ratio of said length of a data frame when said NTSC format video/audio signal is processed to said length of a data frame when said PAL format video/audio signal is processed is made equal to 5/6.

11. A video/audio data generating apparatus for operating on an analog type of video/audio signal formed of a video signal channel and a plurality of audio signal channels to generate corresponding video/audio data conveying the contents of said video/audio signal, comprising:
analog-to digital and digital-to-analog conversion means (15) for converting said video signal channel and each of said audio signal channels to a digital video signal channel and respective digital audio signal channels, and for applying an inverse operation to a digital video signal channel and respective digital audio signal channels when supplied thereto,
coding/decoding means (16, 17, 18) for applying encoding processing to convert said digital video signal channel to compressed video data, and to convert each of said digital audio signal channels to corresponding compressed audio data, and for applying an inverse operation to compressed video data and audio data when supplied thereto,
control means (160, 170, 180, 19) for defining successive portions of said compressed video data which corresponding to respective video frames of said video signal channel, for outputting said portions as respective serial data streams and, for each of said digital audio channels, defining successive portions of said compressed audio data which corresponding to said respective video frames of said video signal, for outputting said successive portions of compressed audio data as respective serial data streams, and for applying an inverse operation to serial data streams of compressed video data and compressed audio data when supplied thereto,
stream processing means (4, 2) for receiving said serial data streams, for generating sequential data frames each containing a compressed video data portion corresponding to one of said video frames and containing each of said compressed audio data portions corresponding to said video frame, with each of said frames having a length that is a fixed integral number of bytes, and for applying an inverse operation to data frames which are supplied thereto to thereby reproduce said serial data streams and supply said streams to said control means.

12. The video/audio data generating apparatus according to claim 11, wherein a ratio of said data frame length when said video/audio signal is a NTSC format signal to said data frame length when said video/audio signal is a PAL format signal having a frame frequency of 25 frames per second, is set as 5/6.

13. The video/audio data generating apparatus according to claim 11 or 12, wherein said analog-to-digital conversion operation is performed using an audio signal sampling frequency of 48 kHz and wherein, for each of said digital audio signal channels, said control means determines each of said portions of compressed audio data based on a cyclically repeated sequence of five frames of said video/audio signal, with said portion representing 1600 audio samples in the case of processing a first frame of said sequence and representing 1602 samples in the case of processing each of the remaining four frames of said sequence.

14. The video/audio data generating apparatus according to claim 11, 12 or 13 wherein said control means comprises data combining and separating means (19), wherein said video/audio signal is formed of a video signal channel and four audio signal channels and wherein, for each of said frames of said video/audio signal, said data combining and separating means (19) combines said compressed video data portion corresponding to said frame and the respective compressed audio data portions corresponding to said frame, for first and second ones of said digital audio signal channels, to form a combined data portion, and outputs said combined data portion as a serial data stream, and outputs the respective compressed audio data portions corresponding to said frame, for third and fourth ones of said digital audio signal channels, as respective serial data streams.

15. The video/audio data generating apparatus according to claim 14, wherein said combining and separating means operates in accordance with DIF (Digital Interface Format) specifications to combine said compressed video and compressed audio data.

16. A video/audio data generating apparatus for use in conjunction with a disk type of data storage apparatus, for operating on an analog type of video/audio signal formed of a video signal channel and a plurality of audio signal channels to generate corresponding video/audio data which are configured in a storage format of said data storage apparatus, for supplying said video/audio data to said data storage apparatus to be stored therein, and for performing an inverse operation upon said video/audio data when read out from said data storage apparatus to thereby recover said video/audio signal, said video/audio data generating apparatus comprising:
analog-to digital and digital-to-analog conversion means (15) for converting said video signal channel and each of said audio signal channels to a digital video signal channel and respective digital audio signal channels, and for applying an inverse operation to a digital video signal channel and respective digital audio signal channels when supplied thereto,
coding/decoding means (16, 17, 18) for applying encoding processing to convert said digital video signal channel to compressed video data, and to convert each of said digital audio signal channels to corresponding compressed audio data, and for applying an inverse operation to compressed video data and audio data when supplied thereto,
control means (160, 170, 180, 19) for defining successive portions of said compressed video data which corresponding to respective video frames of said video signal channel, for outputting said portions as respective serial data streams and, for each of said digital audio channels, defining successive portions of said compressed audio data which corresponding to said respective video frames of said video signal, for outputting said successive portions of compressed audio data as respective serial data streams, and for applying an inverse operation to serial data streams of compressed video data and compressed audio data when supplied thereto,
stream/disk processing means (4, 2) for receiving said serial data streams, for generating sequential data frames each containing a compressed video data portion corresponding to one of said video frames and containing each of said compressed audio data portions corresponding to said video frame, with each of said frames being configured in a storage format of said data storage apparatus and having a length that is an integral number of sectors of said data storage apparatus, and for applying an inverse operation to data frames which are read out from said data storage apparatus to thereby reproduce said serial data streams and supply said streams to said control means.

17. The video/audio data generating apparatus according to claim 16, wherein a ratio of said data frame length when said video/audio signal is a NTSC format signal to said data frame length when said video/audio signal is a PAL format signal having a frame frequency of 25 frames per second, with said ratio expressed on the basis of said number of sectors, is set as 5/6.

18. The video/audio data generating apparatus according to claim 16 or 17 wherein said analog-to-digital conversion operation is performed using an audio signal sampling frequency of 48 kHz and wherein, for each of said digital audio signal channels, said control means determines each of said portions of compressed audio data based on a cyclically repeated sequence of five frames of said video/audio signal, with said portion representing 1600 audio samples in the case of processing a first frame of said sequence and representing 1602 samples in the case of processing each of the remaining four frames of said sequence.

19. The video/audio data generating apparatus according to claim 16, 17 or 18 wherein said control means comprises data combining and separating means (19), wherein said video/audio signal is formed of a video signal channel and four audio signal channels and wherein, for each of said frames of said video/audio signal, said data combining and separating means (19) combines said compressed video data portion corresponding to said frame and the respective compressed audio data portions corresponding to said frame, for first and second ones of said digital audio signal channels, to form a combined data portion, and outputs said combined data portion as a serial data stream, and outputs the respective compressed audio data portions corresponding to said frame, for third and fourth ones of said digital audio signal channels, as respective serial data streams.

20. The video/audio data generating apparatus according to claim 19, wherein said combining and separating means operates in accordance with DIF (Digital Interface Format) specifications to combine said compressed video and compressed audio data.
